# EUROPÄISCHE PATENTSCHRIFT

(11) **EP 4 522 830 B1**
(45) Veröffentlichungstag und Bekanntmachung des Hinweises auf die Patenterteilung: **03.09.2025**
(21) Anmeldenummer: 24708375.1
(22) Anmeldetag: 26.02.2024
(51) Int. Cl.: E04H 1/00, B25J 21/00, E04H 1/12, B65G 1/00

(54) **UMKLEIDEBEREICH FÜR BADETHERMEN, HALLENBÄDER, FREIBÄDER UND FITNESS-STUDIOS**
CHANGING AREA FOR SWIMMING POOLS, INDOOR POOLS, OUTDOOR POOLS, AND FITNESS STUDIOS
ZONE DE VESTIAIRE POUR PISCINES, PISCINES INTÉRIEURES, PISCINES EXTÉRIEURES ET STUDIOS DE FITNESS

(30) Priorität: 03.04.2023 DE 102023108461
(43) Veröffentlichungstag der Anmeldung: 19.03.2025
(73) Patentinhaber: DELTA-X GmbH Ingenieurgesellschaft, 70182 Stuttgart (DE)
(72) Erfinder: BURMEISTER, Dr. Albrecht, 71554 Weissach im Tal (DE); KLAS, Walter, 88099 Neukirch (DE)
(74) Vertreter: DREISS Patentanwälte PartG mbB
(86) Internationale Anmeldenummer: PCT/EP2024/054827
(87) Internationale Veröffentlichungsnummer: WO 2024/208487

(56) Entgegenhaltungen:
- DE-A1- 102021 121 356
- JP-B2- H07 107 718
- US-A1- 2021 170 601

## Beschreibung

Die Erfindung betrifft den oder die Umkleidebereiche von Thermen, öffentlichen Bädern (Freibäder oder Hallenbäder), Fitness-Studios, aber auch die Umkleidebereiche von Industriebetrieben, in denen die Werker sich vor Beginn ihrer Arbeit umziehen und die Alltagskleidung gegen die Arbeitskleidung tauschen.

Seit vielen Jahrzehnten hat sich in solchen Umkleidebereichen ein System etabliert, das sehr statisch ist, wenig Komfort bietet und viel Platz benötigt: Es gibt Umkleidekabinen in denen sich der Nutzer umzieht. Dabei legt der Nutzer die Alltagskleider ab und zieht beispielsweise eine Badehose, einen Badeanzug, Sportbekleidung oder Arbeitsbekleidung an. Die abgelegte Alltagskleidung wird an einen Bügel gehängt und in einem Schließfach eingeschlossen. Das Schließfach befindet sich nicht in der Umkleidekabine, sondern an einem anderen Ort. Den Schlüssel zu diesem Schließfach nimmt der Nutzer mit.

Wenn der Nutzer die Therme oder den Arbeitsplatz verlassen will, sucht er zunächst das Schließfach auf und entnimmt ihm den Bügel mit den daran hängenden Kleidern. Mit dem Bügel in der Hand geht er in eine freie Umkleidekabine und zieht sich dort um. Dieses System ist wenig nutzerfreundlich, weil der Nutzer bei jedem Umkleidevorgang zwei Orte aufsuchen muss: Die Umkleidekabine und den Ort an dem sich die Schließfächer befinden.

Bei großen Umkleidebereichen führt dies dazu, dass viele Nutzer auf den Fluren und Gängen zwischen den Umkleidekabinen und den Schließfächern unterwegs sind. Dieser "Fußgängerverkehr" erfordert breite Gänge und Flure. D.h. der Platzbedarf ist erheblich. Er erhöht aber auch die Zahl der Kontakte zwischen Nutzern. Diese Kontakte sind unerwünscht, weil sie zur Übertragung von Infektionen, sei es Schnupfen, Grippe oder das Corona-Virus, beitragen.

Aus der JP H07 107718 B2 ist ein Umkleidebereich mit mehreren Umkleidekabinen bekannt, der mehrere Umkleidekabinen umfasst. "Hinter" einer Außenwand der Umkleidekabinen ist ein Hochregallager mit einer Vielzahl von Lagerplätzen für Aufbewahrungsboxen vorhanden. Zischen dem Hochregallager und den Umkleidekabinen ist ein Zwischenbereich vorgesehen.

Der Transport einer Aufbewahrungsbox von einer Umkleidekabine zu einem freien Lagerplatz in dem Hochregallager erfolgt über ein Förderband in dem Zwischenbereich und ein Regalbediengerät in dem Hochregallager. Der Transport einer Aufbewahrungsbox zwischen einem Lagerplatz in dem Hochregallager und einer Umkleidekabine benötigt den Einsatz des Regalbediengeräts und eines Förderbands. Das aus der JP H07 107718 B2 bekannte System benötigt viel Platz. Außerdem ist es sehr komplex und vergleichsweise teuer in der Herstellung und im Betrieb.

DE 10 2021 121 356 A1 offenbart einen Umkleidebereich für Badethermen, Hallenbäder, Freibäder, Fitness-Studios und Ähnliches.

Der Erfindung liegt die Aufgabe zugrunde, einen Umkleidebereich bereitzustellen, der nutzerfreundlicher und ansprechender ist, der weniger Fußgängerverkehr in den Gängen und Fluren des Umkleidebereichs verursacht und außerdem - bezogen auf die Zahl der Nutzer - weniger Fläche benötigt. Schließlich soll er - verglichen mit dem Stand der Technik - auch kostengünstiger sein.

Diese Aufgabe wird durch einen Umkleidebereich mit den Merkmalen des Anspruchs 1 gelöst.

Die erfindungsgemäße Umkleidekabine hat, wie andere Umkleidekabinen auch, in der Regel vier Wände. Eine der Wände weist eine Tür auf, durch die der Nutzer in das Innere der Umkleidekabine gelangt. An einer Wand der Umkleidekabine ist eine Öffnung ausgespart. Dabei handelt es sich zumeist um die der Tür gegenüberliegende Wand.

Die Wände der Umkleidekabine, welche der in der Umkleidekabine befindliche Nutzer sieht, werden im Zusammenhang mit der Erfindung als "Innenwände" der Umkleidekabine bezeichnet. Die Rückseite oder Außenseite dieser Wände werden demzufolge als Außenseite einer Wand einer Umkleidekabine bezeichnet.

Der von einer Umkleidekabine aus gesehen hinter dem oder den Regallagern vorhandene Manipulator kann die Lagerplätze aller Regallager erreichen. Daher ist nur ein Manipulator erforderlich, um die Transportboxen in den Lagerplätzen und Zwischenlagerplätzen abzustellen bzw. eine Transportbox aus einem der Lagerplätze oder Zwischenlagerplätze zu entnehmen. Das spart erheblich Platz und Kosten.

Wenn die Umkleidekabinen in zwei Reihen angeordnet sind, dann sind in der Regel entlang dieser beiden Reihen zwei Regallager angeordnet. Sie sind direkt an den Außenwänden der Umkleidekabinen angeordnet. Um die Zahl der Lagerplätz zu erhöhen, können auch den beiden Enden der Gasse Lagerregale angeordnet sein. Der Manipulator kann auch die Lagerplätze LP dieser "zusätzlichen" Lagerregale erreichen und Aufbewahrungsboxen in ihnen abstellen oder aus ihnen entnehmen.

Die Öffnung in der Wand der Umkleidekabinen ist so dimensioniert und positioniert, dass sie vom Inneren der Umkleidekabine den Zugriff auf einen Lagerplatz des hinter der Umkleidekabine befindlichen Regallagers freigibt. Dieser Lagerplatz wird auch als Zwischenlagerplatz bezeichnet.

Anders ausgedrückt: Durch die Öffnung hat ein Nutzer, der sich in der Umkleidekabine befindet, Zugriff auf eine Aufbewahrungsbox, die sich in dem (Zwischen-)Lagerplatz des Regallagers hinter der Öffnung befindet. Der Nutzer kann die in der Öffnung befindliche Aufbewahrungsbox mit seinen Kleidern oder anderen Dingen füllen. Zu einem späteren Zeitpunkt kann er die Kleider oder Gegenstände wieder aus der Aufbewahrungsbox entnehmen, die sich in dem Lagerplatz des Regallagers hinter der Öffnung befindet.

Nachdem sich der Nutzer umgezogen hat, wird diese Aufbewahrungsbox durch den Manipulator aus diesem Lagerplatz entfernt und in einen anderen Lagerplatz in diesem Regallager oder dem Regallager an der Außenseite einer anderen Umkleidekabine eingelagert. Dadurch wird der Lagerplatz hinter der Öffnung frei.

Die Nutzer in den Umkleidekabinen haben keinen Zugriff auf die in den anderen Lagerplätzen eingelagerten Aufbewahrungsboxen. Die Nutzer können von Inneren der Umkleidekabine nur die eine Aufbewahrungsbox erreichen, die sich in dem Lagerplatz hinter der Öffnung in der Wand "ihrer" Umkleidekabine befindet.

Durch die erfindungsgemäße Anordnung ist es möglich, dass kurz nachdem ein Nutzer eine Umkleidekabine ausgewählt hat, beispielsweise indem er die Tür öffnet und sie betritt, eine diesem Nutzer zugeordnete Aufbewahrungsbox aus ihrem Lagerplatz in dem Regallager entnommen und an den Lagerplatz des Regallagers gebracht wird, der sich hinter der Öffnung in der von dem Nutzer ausgewählten Umkleidekabine befindet.

Wenn der Nutzer noch seine Alltagskleidung anhat, dann ist die ihm zugeordnete Aufbewahrungsbox leer und er kann sie mit seinen Kleidern und anderen Dingen, die er nicht mit in den Sauna- oder Wellnessbereich nehmen will, füllen.

Sobald er die Umkleidekabine wieder verlässt oder durch ein anderes Signal zu erkennen gibt, dass der Vorgang des Umziehens abgeschlossen ist, wird die dem Nutzer zugeordnete Aufbewahrungsbox von dem Manipulator aus dem hinter der Öffnung befindlichen Lagerplatz entfernt und einem anderen Lagerplatz eingelagert, der nicht von dem Inneren einer Umkleidekabine und durch die Öffnung in der Wand dieser Umkleidekabine erreichbar ist.

Damit steht die Umkleidekabine wieder für einen anderen Nutzer zur Verfügung. Spätestens, wenn dieser andere Nutzer die Umkleidekabine betritt, wird die ihm zugeordnete Aufbewahrungsbox mit Hilfe des Manipulators in den hinter der Öffnung befindlichen Lagerplatz gebracht, so dass sich der andere Nutzer umziehen kann.

Am Ende des Besuchs der Therme betritt der Nutzer eine beliebige freie Umkleidekabine. Der Manipulator holt die dem Nutzer zugeordnete Aufbewahrungsbox von ihrem Lagerplatz und stellt sie in den (Zwischen-)Lagerplatz, der sich hinter der Öffnung der Umkleidekabine befindet, in der sich der Nutzer aufhält. Dort kann der Nutzer aus der ihm zugeordneten Aufbewahrungsbox seine Alltagskleidung entnehmen und sich umziehen.

Nachdem sich der Nutzer umgezogen hat, ist die Aufbewahrungsbox leer; die Zuordnung zu dem Nutzer kann aufgehoben werden und die Aufbewahrungsbox kann von einem neuen Besucher genutzt werden.

Der erfindungsgemäße Umkleidebereich ermöglicht es, dass jeder Nutzer immer Zugriff auf die ihm zugeordnete ("seine") Aufbewahrungsbox hat, wenn er sich in einer Umkleidekabine seiner Wahl befindet. Er muss die Aufbewahrungsbox anschließend nicht in einem Schließfach einschließen, das räumlich entfernt von der Umkleidekabine aufgestellt ist. Das wird von dem Manipulator erledigt. Das erhöht den Komfort für die Nutzer deutlich, weil "unnötige" Wege zwischen Umkleidekabine und Schließfach bzw. zwischen Schließfach und Umkleidekabine entfallen. Dadurch wird eine Vielzahl von Fußwegen in dem Umkleidebereich vermieden.

Infolgedessen können auch die Verkehrsflächen für die Nutzer entsprechend kleiner ausgeführt werden.

Ein weiterer, nicht zu unterschätzender Gewinn an Komfort und Nutzerfreundlichkeit ist darin zu sehen, dass der Nutzer sich nicht merken muss, wo bzw. in welchem Schließfach er seine Utensilien und Alltagskleidung untergebracht hat.

Er ist frei in der Wahl der Umkleidekabine; "seine" Aufbewahrungsbox wird automatisiert an einem freien Lagerplatz eines Regallagers an der Außenseite einer beliebigen Umkleidekabine zwischengelagert. Wenn der Nutzer nach dem Besuch des Wellness-oder Saunabereichs in eine andere Umkleidekabine geht, wird ihm unmittelbar nach Betreten der Kabine die ihm zugeordnete Aufbewahrungsbox von dem Manipulator in den Lagerplatz hinter der Öffnung in seiner Kabine gebracht. Der Nutzer kann sich umziehen und hat dabei Zugriff auf die in "seiner" Aufbewahrungsbox befindlichen Gegenstände.

Ein weiterer Vorteil dieses Konzepts ist darin zu sehen, dass das Reinigen der Umkleidekabinen und der Aufbewahrungsboxen vereinfacht wird. Es ist möglich, die Aufbewahrungsboxen, wenn sie leer sind, automatisiert zu reinigen und/oder zu desinfizieren. Dadurch wird die Verbreitung von Keimen oder Viren über die Aufbewahrungsboxen wirkungsvoll unterbunden.

Da es keine für den Publikumsverkehr zugänglichen Schließfachbereiche gibt, wird nicht nur Platz/Verkehrsfläche eingespart, sondern die Reinigung und Instandhaltung dieser Verkehrsflächen entfällt ebenfalls.

Darüber hinaus gibt es noch eine Vielzahl von möglichen Funktionalitäten, die sich aus der individuellen Zuordnung zwischen einem Nutzer und einer Aufbewahrungsbox ergeben. Beispielsweise kann immer dann, wenn ein Nutzer den Umkleidebereich bzw. den Wellness- oder Saunabereich oder die Anlage (Therme) verlassen will, automatisiert geprüft werden, ob die ihm zugeordnete Aufbewahrungsbox leer ist.

Wenn sich noch ein Gegenstand in der Aufbewahrungsbox befindet, kann der Nutzer beim Verlassen der Anlage darauf hingewiesen werden und der Gegenstand kann ihm ausgehändigt werden. Das ist ein weiterer großer Nutzen und Komfortgewinn für den Nutzer des erfindungsgemäßen Umkleidebereichs.

In einer bevorzugten Ausführungsform ist das Regallager in der Art eines Rasters angeordnet, wobei "m" Lagerplätze nebeneinander und "n" Lagerplätze übereinander angeordnet sind. Wenn also beispielsweise fünf (5) Lagerplätze nebeneinander und vier (4) Lagerplätze übereinander angeordnet sind, dann hat das Regallager insgesamt 20 Lagerplätze. Einer dieser Lagerplätze ist der Öffnung in der Wand der Umkleidekabine zugeordnet, so dass 19 Lagerplätze verbleiben, die nicht von den Nutzern des Umkleidebereichs erreicht werden können. Diese Lagerplätze können als diebstahlsicheres Zwischenlager für Aufbewahrungsboxen genutzt werden.

Als Manipulator können viele am Markt verfügbare Manipulatoren eingesetzt werden. Als Manipulator (englisch handling device, handling equipment) wird in der Automatisierungstechnik ein Gerät bezeichnet, das den Materialfluss von oder zu einer Wirkstelle bewältigt, also der Handhabung dient (Quelle: Wikipedia "Manipulator").

Die weithin bekannten Industrieroboter oder Knickarmroboter sind Manipulatoren im Sinne der Erfindung. Beim Handhaben wird eine definierte Position eines geometrisch definierten Objekts (hier das Abstellen einer Aufbewahrungsbox in einem Lagerplatz eines Regallagers) entweder geschaffen, oder für eine begrenzte Zeit aufrechterhalten. Die bei der Erfindung zum Einsatz kommenden Manipulatoren sind in aller Regel programmgesteuert. Sie sind zur Handhabung der Aufbewahrungsboxen in einem erfindungsgemäßen Umkleidebereich sehr gut geeignet.

Erfindungsgemäß können mehrere Umkleidekabinen in zwei voneinander beabstandeten Reihen angeordnet, so dass zwischen den beiden Reihen eine Gasse entsteht. Die Regallager und mindestens ein Manipulator (stationär oder verfahrbar) sind in der Gasse so angeordnet, dass der Manipulator alle Lagerplätze beider Reihen von Umkleidekabinen erreichen kann. Dadurch ergibt sich eine ansprechende, nutzerfreundliche und platzsparende Anordnung der Umkleidekabinen und es werden aber ausreichend viele Lagerplätze in den Regallagern an den Außenseiten der Umkleidekabinen bereitgestellt.

Die Kapazität des erfindungsgemäßen Umkleidebereichs kann über die Zahl der Umkleidekabinen in einer Reihe skaliert werden. Natürlich können auch mehrere Umkleidebereiche (mit jeweils zwei Reihen von Umkleidekabinen nebeneinander oder verteilt auf mehrere Stockwerke übereinander angeordnet werden.

In vorteilhafter Ausgestaltung ist mindestens einer der in den Gassen vorhandenen Manipulatoren verfahrbar. Dadurch können nahezu beliebig viele Umkleidekabinen in einer Reihe angeordnet werden. Durch das Verfahren des Manipulators in der Gasse kann dieser trotz seiner beschränkten Reichweite alle Lagerplätze des Umkleidebereichs erreichen.

Um eine Skalierbarkeit des erfindungsgemäßen Umkleidebereichs zu gewährleisten, können zwei oder drei Umkleidebereiche nach einem der vorhergehenden Ansprüche nebeneinander auf der gleichen Ebene aufgebaut werden und über eine, zwei oder drei Radialtransportvorrichtungen so miteinander verknüpft werden, dass die Aufbewahrungsboxen zwischen den Umkleidebereichen hin- und hertransportiert werden können.

Man kann dieses Prinzip auch in vertikaler Richtung skalieren, indem man mehrere Umkleidebereiche übereinander anordnet. Dann sind zusätzlich eine, oder bevorzugt mehrere, Vertikalfördereinrichtungen vorgesehen, welche die Radialtransportvorrichtungen verschiedener Ebenen miteinander verbinden. Dann können Aufbewahrungsboxen in vertikaler Richtung zwischen verschiedenen Ebenen hin- und hertransportiert werden.

Um den Austausch von Aufbewahrungsboxen zwischen den in verschiedenen Umkleidungsbereichen angeordneten Manipulatoren zu ermöglichen, kann oberhalb der Umkleidebereiche eine Horizontalfördereinrichtung angeordnet sein, wobei die Horizontalfördereinrichtung eine Aufbewahrungsbox von einem ersten Manipulator annehmen und an einen anderen Manipulator abgeben kann, der sich in einer anderen Gasse wie der erste Manipulator befindet. Die Horizontalfördereinrichtung ist bevorzugt auf einer geschlossenen Bahn oder einer Schiene verfahrbar und kann eine Aufbewahrungsbox von einem Manipulator eines ersten Umkleidebereichs annehmen und diese Aufbewahrungsbox an den Manipulator eines anderen Umkleidebereichs abgeben.

Es können auch mehrere Umkleidebereiche auf zwei oder mehr Ebenen übereinander angeordnet sein. Dann ist mindestens eine Vertikalfördereinrichtung vorgesehen, welche die Radialtransportvorrichtung(en) und/oder die Horizontalfördereinrichtung(en) verschiedener Ebenen mit einander verbindet, so dass Aufbewahrungsboxen zwischen den verschiedenen Ebenen hin- und hertransportiert werden können.

Wenn die Umkleidekabinen kreisförmig angeordnet sind, ist der der Manipulator bevorzugt in der Mitte dieses Kreises angeordnet. Dann ist keine Gasse im eigentlichen Sinn vorhanden. Der Manipulator muss dann nicht verfahrbar sein, sondern kann ortsfest installiert sein. Durch Schwenken und Drehen des Manipulators kann er alle Lagerplätze erreichen und sie mit Aufbewahrungsboxen bestücken oder eine Aufbewahrungsbox aus ihnen entnehmen.

Die oberhalb der Manipulatoren angeordnete Horizontalfördereinrichtung überbrückt nicht nur die Umkleidekabinen, sondern auch die Zugangswege, auf denen die Nutzer in die Umkleidekabinen laufen. Dadurch ist ein Austausch von Aufbewahrungsboxen zwischen den Regallagern verschiedener Umkleidebereiche möglich, ohne die Nutzer der erfindungsgemäßen Umkleidebereiche zu behelligen.

Durch die Horizontalfördereinrichtung kann jeder Lagerplatz in jedem Regallager als Zwischenlager für eine Aufbewahrungsbox genutzt werden. Der Transport bzw. Austausch von Aufbewahrungsboxen zwischen den Regallagern in den Gassen verschiedener Umkleidebereiche ist in jedem Fall gewährleistet.

Weitere Vorteile und vorteilhafte Ausgestaltungen der Erfindung sind der nachfolgenden Zeichnung, deren Beschreibung und den Patentansprüchen entnehmbar. Alle in den Zeichnungen und der Beschreibung offenbarten Merkmale können sowohl einzeln als auch in beliebiger Kombination erfindungswesentlich sein.

Es zeigen:
- Figur 1: eine Innenansicht einer erfindungsgemäßen Umkleidekabine;
- Figur 2: eine Ansicht eine einer Außenwand mit einem davor angeordneten Regallager;
- Figur 3: eine Isometrie eines erfindungsgemäßen Umkleidebereichs mit zwei Reihen von Umkleidekabinen, zwei Regallagern und einem in der Gasse zwischen den Regallagern bewegbaren Manipulator;
- Figur 4: eine Draufsicht auf einen erfindungsgemäßen Umkleidebereich (ohne Manipulator)
- Figur 5: einen Schnitt durch den Umkleidebereich gemäß Figur 4 und
- Figur 6: ein Ausführungsbeispiel eines Manipulators.

### Beschreibung der Ausführungsbeispiele

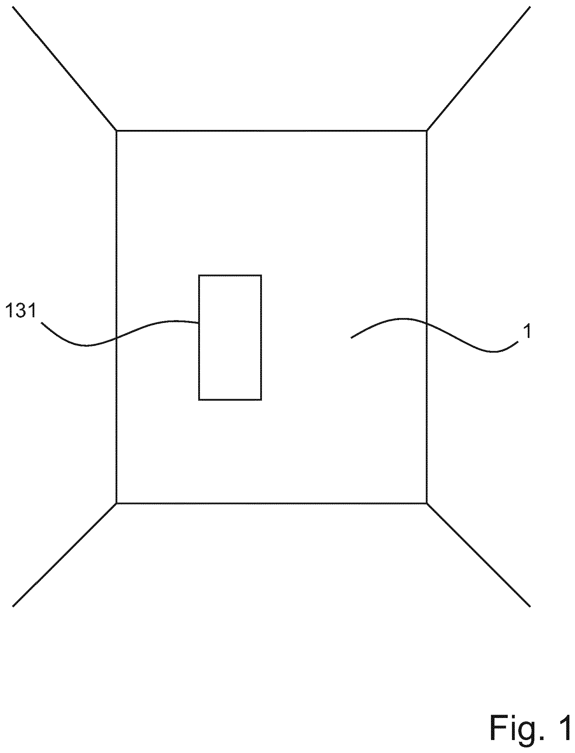

In der Figur 1 ist eine Wand 1 einer erfindungsgemäßen Umkleidekabine dargestellt. Die Seitenwände sowie Boden und Decke der Umkleidekabine sind nur teilweise dargestellt und nicht mit Bezugszeichen versehen. Die Wand in der eine Eingangstür vorhanden ist, ist nicht dargestellt.

Bei der Wand 1 handelt es sich um die Wand, welche der Eingangstür (nicht dargestellt) der Umkleidekabine gegenüberliegend angeordnet ist. Man kann sie deshalb auch als Rückwand bezeichnen. In der Wand 1 ist eine Öffnung 131 ausgespart. Diese Öffnung 131 kann mit einer Klappe oder einem Schieber (nicht dargestellt) verschlossen sein und bei Bedarf geöffnet werden.

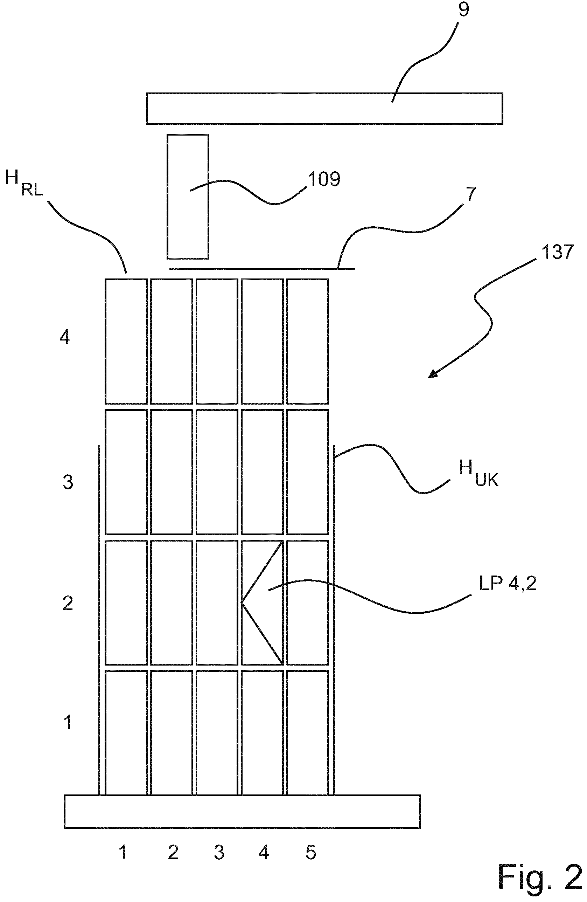

Bei der erfindungsgemäßen Umkleidekabine ist hinter der Wand 1, d.h. außerhalb der Umkleidekabine (d. h. an den Außenwänden der Umkleidekabinen 131), ein Regallager 137 angeordnet, das in der Figur 2 dargestellt ist.

Die Figur 2 zeigt eine Ansicht von außen (auf die Außenwand) auf die in der Figur 1 dargestellte Wand 1. In der Figur 2 ist die Wand 1 durch das erwähnte Regallager weitgehend verdeckt. Dieses Regallager 137 weist bei diesem Ausführungsbeispiel vier vertikal übereinander angeordnete Ebenen und fünf nebeneinander angeordnete Spalten auf. Insgesamt hat das Regallager daher zwanzig Lagerplätze LP (die Zahl der Lagerplätze entspricht dem Produkt aus der Zahl der Spalten (m = 5) und der Zahl der übereinander angeordneten Reihen (n = 4)).

Wenn man die Lagerplätze LP entsprechend den Laufindices nummeriert, dann ist der Lagerplatz LP_{4,2} so positioniert, dass er sich hinter der Öffnung 131 (siehe Figur 1) befindet. Eine vor der Öffnung 131 in der Wand 1 angeordnete Klappe (ohne Bezugszeichen) ist in der Figur 2 angedeutet.

Wenn sich in dem Lagerplatz LP_{4,2} eine Aufbewahrungsbox (nicht dargestellt) befindet, dann kann der Nutzer der Umkleidekabine durch die Öffnung 131 auf die an dem Lagerplatz LP_{4,2} befindliche Aufbewahrungsbox zugreifen. Er kann sie befüllen oder Gegenstände aus ihr entnehmen. Er kann sie auch in das Innere der Umkleidekabine 131 heben und sie dort befüllen oder Gegenstände aus ihr entnehmen.

Die anderen neunzehn Lagerplätze sind für den Nutzer innerhalb der Umkleidekabine nicht erreichbar, weil die Wand 1 nur eine Öffnung 131 aufweist, die vom Inneren der Umkleidekabine den Zugriff auf genau einen Lagerplatz (hier LP_{4,2}) freigibt.

In der Figur 2 ist auch zu erkennen, dass das Regallager 137 hinter der Wand 1 der Umkleidekabine deutlich höher ist als die Umkleidekabine. Die Höhe H_{UK} der Umkleidekabine und die Höhe H_{RL} des Regallagers 137 sind in der Figur 2 eingezeichnet.

Oberhalb des Regallagers 137 ist eine optionale Zwischendecke 7 eingezogen, die dafür sorgt, dass eine optionale Transportebene oberhalb des Regallagers 137 von dem Nutzerbereich räumlich getrennt ist. Das verringert die Unfallgefahr und führt zu einem ansprechenderen Aussehen des Umkleidebereichs.

Oberhalb der Zwischendecke 7 befindet sich in der optionale Transportebene mit einer nur schematisch dargestellten Horizontalfördereinrichtung 9. Die Horizontalfördereinrichtung 9 dient dazu, Aufbewahrungsboxen 109, von denen in der Figur 1 nur eine dargestellt ist, zwischen verschiedenen Umkleidebereichen, die nebeneinander angeordnet sind, zu transportieren.

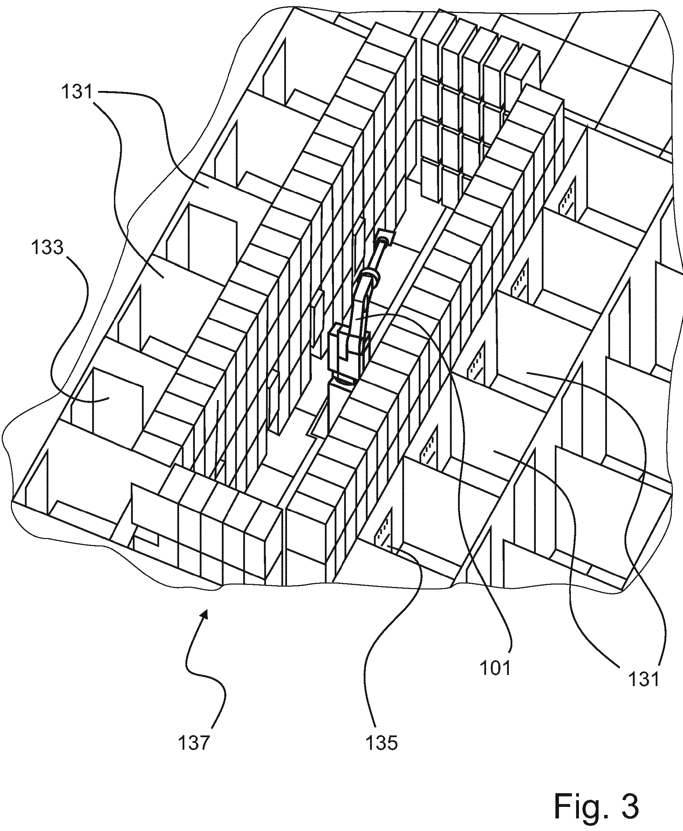

In der Figur 3 ist ein Ausführungsbeispiel eines erfindungsgemäßen Umkleidebereichs in einer Isometrie dargestellt. Aus Gründen der Übersichtlichkeit sind nur wenige Umkleidekabinen mit Bezugszeichen versehen worden. In der in Figur 3 linken Reihe von Umkleidekabinen 131 sind die Türen 133 geöffnet dargestellt. An der den Türen 133 gegenüberliegenden Wand ist die bereits erwähnte Öffnung 135 ausgespart. Diese Öffnung kann man bei den Umkleidekabinen 131 der rechten Reihe in Figur 3 sehen. Diese Öffnung 135 kann mit einer Klappe oder mit einem Schieber verschlossen sein bzw. bei Bedarf geöffnet werden.

In einer Gasse, die durch die zwei Reihen von Umkleidekabinen 131 gebildet wird, befinden sich zwei Regallager 137. die, wie anhand der Figur 2 dargestellt, direkt an den Außenwänden der Umkleidekabinen 131 angeordnet sind.

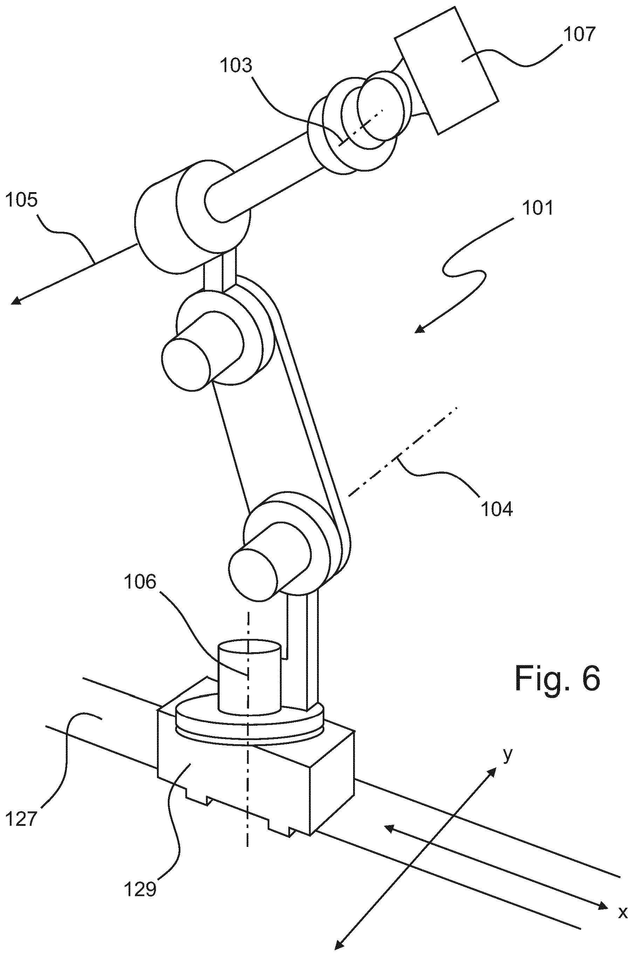

In der Gasse zwischen den Regallagern 137 ist ein verfahrbarer oder stationärer Manipulator 101 vorgesehen. Details des Manipulator 101 werden in der Figur 6 illustriert und weiter unter erläutert.

Ein Effektor 107 (siehe Figur 6) des Manipulators 101 kann alle Lagerplätze LP der Regallager 137 erreichen.

Er kann eine Aufbewahrungsbox 109, die sich in irgendeinem der Lagerplätze befindet, aufnehmen oder greifen und an jedem beliebigen Lagerplatz absetzen.

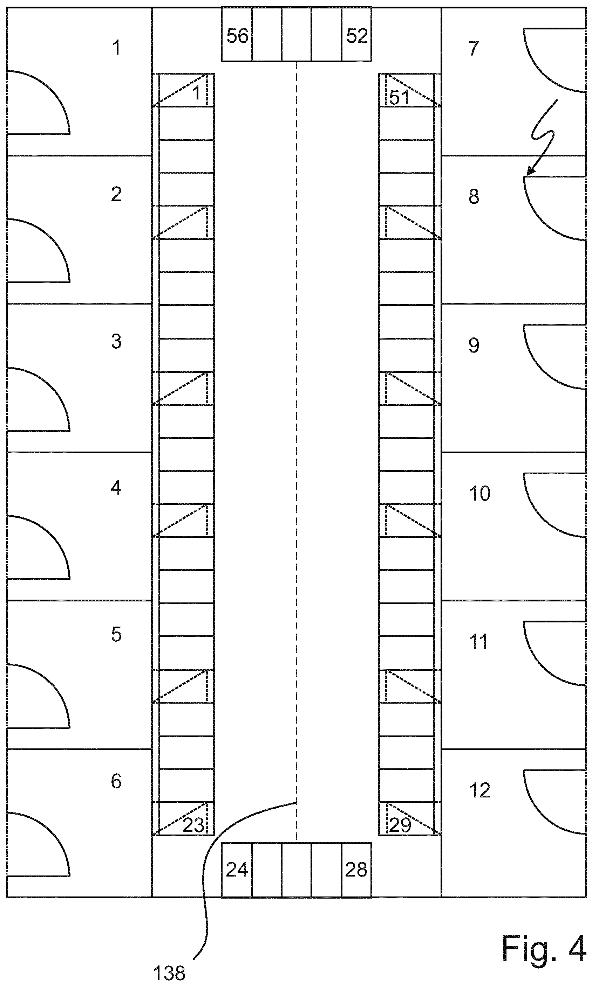

Die Figur 4 zeigt den erfindungsgemäßen Umkleidebereich in einer Draufsicht. Er umfasst zwei Reihen von jeweils sechs Umkleidekabinen 131, die in der Figur 4 von 1 bis 12 durchnummeriert sind. Diese Lagerplätze befinden sich bei diesem Ausführungsbeispiel zu beiden Seiten der Längsachse 138 einer Gasse innerhalb derer sich der Manipulator 101 bewegt. Diese Lagerplätze haben die Nummern 1 bis 23 sowie 29 bis 51.

Zusätzlich können an den Enden der Gasser weitere (optionale) Lagerplätze vorhanden sein. Sie haben in der Figur 8 die Nummern 24 bis 28 sowie 52 bis 56.

Der Manipulator 101 kann die Lagerplätze aller Regallager 137 erreichen und Aufbewahrungsboxen 109 aus Ihnen entnehmen oder in ihnen einlagern.

Die Regallager 137 umfassen bei diesem Ausführungsbeispiel sechsundfünfzig Lagerplätze in einer Ebene. In der Regel umfassen die Regellager 137 mehrere Ebenen **(**. z. B. 4 oder 5 Ebenen) in den Lagerplätze LP vorhanden sind.

Über die Länge der Gasse und die Breite der Gasse kann die Zahl der in einer Ebene vorhandenen Lagerplätze an den Bedarf angepasst werden.

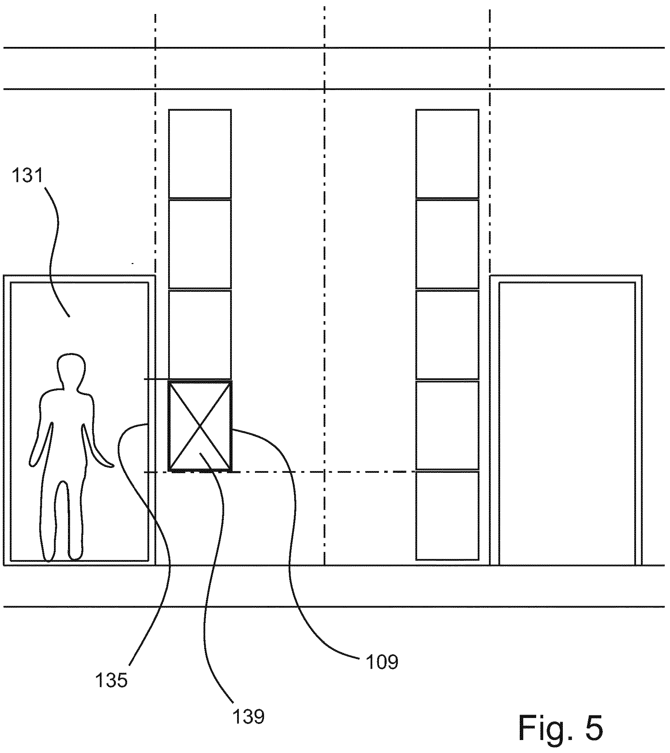

Bei dem in Figur 5 dargestellten Ausführungsbeispiel sind Lagerplätze in fünf Ebenen übereinander angeordnet. In Summe stehen somit in dem Umkleidebereich mehr als zweihundertfünzig Lagerplätze für Aufbewahrungsboxen 109 zur Verfügung.

Im Inneren des Umkleidebereichs und zwischen den Regallagern 137 befindet sich der Manipulator 101 (siehe Figur 6). Er kann in Richtung einer X-Achse und optional zusätzlich in Richtung einer Y-Achse verfahrbar sein. In den Figuren 4 und 5 ist der Manipulator 101 nicht dargestellt.

Wie bereits erwähnt, kann der Manipulator 101 jeden Lagerplatz der Regallager 137 erreichen. Mit Hilfe des Effektors 107 kann er eine Aufbewahrungsbox, die in einem der Lagerplätze abgestellt ist, entnehmen und in einem anderen Lagerplatz absetzen.

Der Betrieb des erfindungsgemäßen Umkleidebereichs wird nachfolgend anhand der Figur 5 erläutert.

Wenn an dem der direkt hinter der Öffnung 135 der Umkleidekabine 131 befindlichen Lagerplatz 139 eine Aufbewahrungsbox 109 von dem Manipulator 101 abgestellt wird, dann kann der Nutzer der Umkleidekabine 131 zu Beginn seines Besuchs, nachdem er sich umgezogen hat, seine Kleidungsstücke und persönlichen Gegenstände in dieser Aufbewahrungsbox 109 ablegen.

Sobald der Nutzer Umkleidekabine verlassen will, kann er ein Signal geben, dass diese Aufbewahrungsbox 109 entfernt werden kann. Dieses Signal kann auch automatische generiert werden, wenn der Nutzer die Umkleidekabine 131 verlässt.

Dann fährt der Manipulator 101 mit seinem Effektor 107 die Aufbewahrungsbox 109 i, Lagerplatz 139 an und nimmt diese Aufbewahrungsbox 109 aus dem Lagerplatz 139. Anschließend stellt er diese Aufbewahrungsbox 139 an einem anderen Lagerplatz des Umkleidebereichs ab. Er stellt die Aufbewahrungsbox 109 nur in einem Lagerplatz ab, der nicht direkt hinter einer Öffnung 135 einer Umkleidekabine 131 angeordnet ist. Damit ist diese Aufbewahrungsbox 109 vor dem Zugriff unberechtigter Personen geschützt.

Sobald der Lagerplatz 139 wieder "leer" ist, kann der nächste Nutzer die Umkleidekabine 131 betreten. Wenn dieser Nutzer die Therme soeben erst betreten hat, wird ihm eine leere Aufbewahrungsbox 109 in den Lagerplatz 139 hinter der Öffnung 135 in der Umkleidekabine 131 gestellt. Er kann sich dann umziehen.

Wenn der nächste Benutzer den Besuch in der Therme beenden will, dann lässt er sich die mit seinen Utensilien gefüllte Aufbewahrungsbox 109, die sich an einem beliebigen Lagerplatz des Regallagers 137 befindet, an den Lagerplatz 139 bringen, der sich direkt hinter der Öffnung 135 in seiner Umkleidekabine 131 angeordnet ist.

Dann kann der Nutzer die Aufbewahrungsbox 109 öffnen und ihr seine Utensilien und Kleidungstücke entnehmen, so dass er sich wieder anziehen kann.

Die gleichen Vorgänge erfolgen analog auch in den anderen Umkleidekabinen 131. Dadurch ist es möglich, dass sich mehrere hundert Benutzer zwölf Umkleidekabinen "teilen", wobei die Nutzer die Umkleidekabinen selbstverständlich nacheinander nutzen.

Die Gasse in der sich der Manipulator 101 bewegt, ist für das Publikum nicht zugänglich; es hält sich während des Betriebs niemand dort auf, so dass von dem Manipulator 101 keine Gefahr für das Publikum oder die Beschäftigten ausgeht.

In der Figur 6 ist ein Ausführungsbeispiel eines erfindungsgemäßen Manipulators 101 mit einem nur schematisch dargestellten Effektor 107 dargestellt. Der Manipulator 101 verfügt über vier Drehachsen 103, 105, 104 und 106. Außerdem kann der Manipulator 101 in Richtung der X-Achse linear verfahrbar sein.

Zusätzlich kann eine Y-Achse (optional) vorhanden sein. Sie kann vorteilhaft sein, wenn die Gasse sehr breit ist. Durch Ansteuern der optionalen Y-Achse kann der Manipulator 101 auch bei sehr breiten Gassen die Regallager zu beiden Seiten der Gasser erreichen.

Lediglich angedeutet ist eine Schiene 127, auf welcher ein Basisteil 129 des Manipulators 101 in Richtung der X-Achse verfahrbar geführt sein kann. Durch eine Ansteuerung der Drehachsen 103 bis 106 und die Linearachse(n) in Richtung der X- und Y-Achse, kann der Effektor 107 innerhalb seines Arbeitsbereichs eine Vielzahl von Positionen und Ausrichtungen einnehmen. Er kann mit einer Haltefläche des Effektors 107 an das Gegenstück / eine Gegenflächen einer nicht dargestellten Aufbewahrungsbox 109 bewegt werden.

Anschließend werden die Halteelemente des Effektors 107 aktiviert und die Verbindung zwischen dem Effektor 107 und der Aufbewahrungsbox 109 hergestellt, so dass die Aufbewahrungsbox mit Hilfe des Manipulators 101 an den gewünschten Ort gebracht und dort abgestellt werden kann. Danach wird die Verbindung zwischen Effektor 107 und Aufbewahrungsbox 109 wieder gelöst.

Aufbau und Funktion des Effektors 107 und dessen Zusammenwirken mit einer Aufbewahrungsbox 109 sind in einer am gleichen Tag von der gleichen Anmelderin beim DPMA eingereichten Patentanmeldung "Aufbewahrungsboxen-Manipulator" beschrieben. Deren Offenbarung wird hiermit durch Bezugnahme in diese Patentanmeldung aufgenommen.

### Bezugszeichenliste

1 Wand einer Umkleidekabine
LP Lagerplatz
H_{UK} Höhe
H_{LR} Höhe des Regallagers
7 Zwischendecke
9 Horizontalfördereinrichtung
101 Aufbewahrungsboxen-Manipulator
103 bis 106 Drehachsen des Manipulators
107 Effektor
109 Aufbewahrungsbox
127 Schiene
129 Basisteil
131 Umkleidekabine
133 Tür der Umkleidekabine
135 Öffnung
137 Regallager
138 Längsachse
139 Lagerplatz

## Patentansprüche

1. Umkleidebereich umfassend mehrere Umkleidekabinen (131), wobei jede Umkleidekabine (131) mehrere Wände (1) und eine Tür umfasst, wobei eine Wand (1) der Umkleidekabine eine Öffnung (135) aufweist, die einen Lagerplatz (LP_{4,2}) für eine Aufbewahrungsbox (11) freigibt, wobei mehrere Umkleidekabinen (131) in einer Reihe nebeneinander angeordnet sind, wobei hinter den Wänden (1) mit Öffnung (135) der Umkleidekabinen (131) ein Regallager (137) für Aufbewahrungsboxen (11) angeordnet ist, und wobei in dem Regallager (137) mehrere Lagerplätze (LP_{i.j}) für Aufbewahrungsboxen (11) nebeneinander und übereinander angeordnet sind,
wobei das Regallager (137) direkt hinter den Wänden (1) mit Öffnung (3) der Umkleidekabinen (131) angeordnet ist, die den Umkleidekabinen (131) zugeordneten Lagerplätze (LP_{4,2}) in das Regallager (137) integriert sind, hinter dem Regallager (137) ein Manipulator (101) mit einem Effektor (107) vorhanden ist, und alle Lagerplätze (LP) des Regallagers (137) einschließlich von Zwischenlagerplätzen (LP_{4,2}) von dem Effektor (107) des Manipulators (101) erreichbar sind,
**dadurch gekennzeichnet, dass**
der Manipulator (101) ein Knickarmroboter ist.

2. Umkleidebereich nach Anspruch 1, **dadurch gekennzeichnet, dass** zwei Reihen von Umkleidekabinen (131) zueinander beabstandet zueinander angeordnet sind, und dass in einer von den zwei Reihen von Umkleidekabinen (131) gebildeten Gasse (13) ein Regallager (137) pro Reihe und ein Manipulator (101) vorgesehen ist.

3. Umkleidebereich nach Anspruch 2, **dadurch gekennzeichnet, dass** an einem oder beiden Enden der Gasse (13) weitere Reihen von Umkleidekabinen (131) angeordnet sind.

4. Umkleidebereich nach einem der vorhergehenden Ansprüche, **dadurch gekennzeichnet, dass** der Manipulator (101) entlang der Regallager (137) und ggf. in der Gasse zwischen zwei Regallagern (137) bewegbar ist.

5. Umkleidebereich nach Anspruch 4, **dadurch gekennzeichnet, dass** der Manipulator (101) auf einem automatischen Transportfahrzeug montiert ist, und dass das Transportfahrzeug mittels geeigneter Sensorik einer kontinuierlichen oder einer unterbrochenen Leitlinie folgt.

6. Umkleidebereich nach Anspruch 5 , **dadurch gekennzeichnet, dass** optische, magnetische oder induktive Leitlinien verwendet und mit Kameras (Farbkontrast), Hallsensoren (Magnetfeld) oder Antennen (elektrisches Wechselfeld) detektiert werden.

7. Umkleidebereich nach Anspruch 5, **dadurch gekennzeichnet, dass** Schienen (127) oder eine Linearführung als Leitlinie verwendet werden.

8. Umkleidebereich nach einem der vorhergehenden Ansprüche, **dadurch gekennzeichnet, dass** oberhalb des Manipulators (101) eine Horizontalfördereinrichtung (9) angeordnet ist, und dass die Horizontalfördereinrichtung (9) eine Aufbewahrungsbox (109) von einem ersten Manipulator (101) annehmen und an einen zweiten Manipulator (101) eines anderen Umkleidebereichs abgeben kann.

9. Umkleidebereich nach einem der vorhergehenden Ansprüche, **dadurch gekennzeichnet, dass** mehrere Umkleidebereiche auf zwei oder mehr Ebenen übereinander angeordnet sind, und dass mindestens eine Vertikalfördereinrichtung vorgesehen ist, welche die Umkleidebereiche verschiedener Ebenen miteinander verbindet, so dass Aufbewahrungsboxen (11) zwischen verschiedenen Ebenen hin- und hertransportiert werden können.

10. Umkleidebereich nach einem der vorhergehenden Ansprüche, **dadurch gekennzeichnet, dass** die Reihen von Umkleidekabinen (131) gerade oder gekrümmt sind.

11. Umkleidebereich nach einem der vorhergehenden Ansprüche, **dadurch gekennzeichnet, dass** der Manipulator (101) einen Effektor (107) umfasst, und dass der Effektor (107) lösbar mit einer Schnittstelle einer Aufbewahrungsbox (11) verbindbar/koppelbar ist.

## Claims

1. A changing area, comprising a plurality of changing cabins (131), wherein each changing cabin (131) comprises a plurality of walls (1) and a door, wherein a wall (1) of the changing cabin has an opening (135) which exposes a storage location (LP_{4,2}) for a storing box (11), wherein a plurality of changing cabins (131) are arranged in a row next to one another, wherein a shelf store (137) for storing boxes (11) is arranged behind the walls (1) with opening (135) of the changing cabins (131), and wherein a plurality of storage locations (LP_{i.j}) for storing boxes (11) are arranged side by side and one above the otherin the shelf store (137),
wherein
the shelf storage (137) is arranged directly behind the walls (1) with opening (3) of the changing cabins (131), the storage locations (LP_{4,2}) assigned to the changing cabins (131) are integrated into the shelf storage (137), a manipulator (101) with an effector (107) is provided behind the shelf storage (137), and all storage locations (LP) of the shelf storage (137), including intermediate storage locations (LP_{4,2}), can be reached from the effector (107) of the manipulator (101),
**characterized in that**
the manipulator (101) is an articulated arm robot.

2. The changing area according to claim 1, **characterized in that** two rows of changing cabins (131) are arranged at a distance from one another, and **in that** one shelf storage (137) per row and one manipulator (101) are provided in an aisle (13) formed by the two rows of changing cabins (131).

3. The changing area according to claim 2, **characterized in that** further rows of changing cabins (131) are arranged at one or both ends of the aisle (13).

4. The changing area according to any of the preceding claims,
**characterized in that** the manipulator (101) is movable along the rack storages (137) and possibly in the aisle between two rack storages (137).

5. The changing area according to claim 4, **characterized in that** the manipulator (101) is mounted on an automatic transport vehicle, and **in that** the transport vehicle follows a continuous or an interrupted guide line by means of suitable sensors.

6. The changing area according to claim 5, **characterized in that** optical, magnetic or inductive guidelines are used and detected with cameras (color contrast), Hall sensors (magnetic field) or antennas (alternating electric field).

7. The changing area according to claim 5, **characterized in that** rails (127) or a linear guide are used as a guide line.

8. The changing area according to any of the preceding claims,
**characterized in that** a horizontal conveyor apparatus (9) is arranged above the manipulator (101), and **in that** the horizontal conveyor apparatus (9) can accept a storing box (109) from a first manipulator (101) and deliver it to a second manipulator (101) of another changing area.

9. The changing area according to any of the preceding claims,
**characterized in that** a plurality of changing areas are arranged one above the other on two or more levels, and **in that** at least one vertical conveyor apparatus is provided which interconnects the changing areas of different levels, so that storing boxes (11) can be transported back and forth between different levels.

10. The changing area according to any of the preceding claims,
**characterized in that** the rows of changing cabins (131) are straight or curved.

11. The changing area according to any of the preceding claims,
**characterized in that** the manipulator (101) comprises an effector (107), and **in that** the effector (107) is detachably connectable/couplable to an interface of a storing box (11).

## Revendications

1. Zone de vestiaire comprenant plusieurs cabines de vestiaire (131), dans laquelle chaque cabine de vestiaire (131) comprend plusieurs parois (1) et une porte, dans laquelle une paroi (1) de la cabine de vestiaire présente une ouverture (135) qui libère un emplacement de stockage (LP_{4,2}) pour une boîte de rangement (11), dans laquelle plusieurs cabines de vestiaire (131) sont disposées les unes à côté des autres en une rangée, dans laquelle un rayonnage (137) pour des boîtes de rangement (11) est disposé derrière les parois (1) avec ouverture (135) des cabines de vestiaire (131), et dans laquelle plusieurs emplacements de stockage (LP_{i.j}) pour les boîtes de rangement (11) sont disposés les uns à côté des autres et les uns au-dessus des autres dans le rayonnage (37),
dans laquelle
le rayonnage (137) est disposé directement derrière les parois (1) avec ouverture (3) des cabines de vestiaire (131), les emplacements de stockage (LP_{4,2}) associés aux cabines de vestiaire (131)
sont intégrés dans le rayonnage (137), un manipulateur (101) avec un effecteur (107) est présent derrière le rayonnage (137), et tous les emplacements de stockage (LP) du rayonnage (137), y compris des emplacements de stockage intermédiaires (LP_{4,2}), peuvent être atteints par l'effecteur (107) du manipulateur (101), **caractérisée en ce que** le manipulateur (101) est un robot à bras articulé.

2. Zone de vestiaire selon la revendication 1, **caractérisée en ce que** deux rangées de cabines de vestiaire (131) sont disposées à distance l'une de l'autre, et que dans une allée (13) formée par les deux rangées de cabines de vestiaire (131) est prévu un rayonnage (137) par rangée et un manipulateur (101).

3. Zone de vestiaire selon la revendication 2, **caractérisée en ce que** d'autres rangées de cabines de vestiaire (131) sont disposées à l'une ou aux deux extrémités de l'allée (13).

4. Zone de vestiaire selon l'une quelconque des revendications précédentes, **caractérisée en ce que** le manipulateur (101) est mobile le long des rayonnages (137) et, le cas échéant, dans l'allée entre deux rayonnages (137).

5. Zone de vestiaire selon la revendication 4, **caractérisée en ce que** le manipulateur (101) est monté sur un véhicule de transport automatique, et que le véhicule de transport suit une ligne de guidage continue ou discontinue au moyen de capteurs appropriés.

6. Zone de vestiaire selon la revendication 5, **caractérisée en ce que** des lignes de guidage optiques, magnétiques ou inductives sont utilisées et détectées avec des caméras (contraste de couleurs), capteurs à effet Hall (champ magnétique) ou antennes (champ électrique alternatif).

7. Zone de vestiaire selon la revendication 5, **caractérisée en ce que** des rails (127) ou un guidage linéaire sont utilisés comme ligne de guidage.

8. Zone de vestiaire selon l'une quelconque des revendications précédentes, **caractérisée en ce qu'**un convoyeur horizontal (9) est disposé au-dessus du manipulateur (101), et que le convoyeur horizontal (9) peut recevoir une boîte de rangement (109) d'un premier manipulateur (101) et la délivrer à un deuxième manipulateur (101) d'une autre zone de vestiaire.

9. Zone de vestiaire selon l'une quelconque des revendications précédentes, **caractérisée en ce que** plusieurs zones de vestiaire sont superposées sur deux niveaux ou plus, et qu'il est prévu au moins un convoyeur vertical, lequel relie entre elles les zones de vestiaire de différents niveaux, de sorte que les boîtes de rangement (11) peuvent être transportées en va-et-vient entre différents niveaux.

10. Zone de vestiaire selon l'une quelconque des revendications précédentes, **caractérisée en ce que** les rangées de cabines de vestiaire (131) sont droites ou courbes.

11. Zone de vestiaire selon l'une quelconque des revendications précédentes, **caractérisée en ce que** le manipulateur (101) comprend un effecteur (107), et que l'effecteur (107) peut être connecté/couplé de manière amovible à une interface d'une boîte de rangement (11).
